# EUROPEAN PATENT APPLICATION

(11) **EP 4 633 270 A1**
(43) Date of publication of application: **15.10.2025**
(21) Application number: 25166319.1
(22) Date of filing: 26.03.2025
(51) Int. Cl.: H04W 72/23, H04W 4/70

(54) **APPARATUS, METHOD AND COMPUTER PROGRAM**

(30) Priority: 12.04.2024 GB 202405269
(71) Applicant: Nokia Technologies Oy, 02610 Espoo (FI)
(72) Inventor: KESHAVAMURTHY, Prajwal, 81241 Munich (DE); BARBU, Oana-Elena, 9220 Aalborg (DK); KIILERICH PRATAS, Nuno Manuel, 9220 Aalborg (DK)
(74) Representative: Script Intellectual Property LLP

(57) **Abstract**

There is provided an ambient internet of things, AloT, device comprising means for obtaining an identity of the AloT device, receiving a downlink transmission from at least one activator apparatus, wherein the downlink transmission comprises a configuration of a resource mapping, wherein the configuration of the resource mapping is for uplink transmission from the AloT device, determining a resource for uplink transmission based, at least in part, on the configuration of the resource mapping and the identity of the AloT device and performing uplink transmission, in response to the downlink transmission, using the determined resource for the uplink transmission.

## Description

### Field

The present application relates to a method, apparatus, system and computer program and in particular but not exclusively to resource mapping between activation and response signals in Ambient Internet of Things (AloT).

### Background

A communication system can be seen as a facility that enables communication sessions between two or more communication devices, or provides communication devices access to a network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards are the so-called 4G (4th Generation), 5G (5th Generation) standards provided by 3GPP.

### Summary

In a first aspect there is provided an ambient internet of things, AloT, device comprising means for obtaining an identity of the AloT device, receiving a downlink transmission from at least one activator apparatus, wherein the downlink transmission comprises a configuration of a resource mapping, wherein the configuration of the resource mapping is for uplink transmission from the AloT device, determining a resource for uplink transmission based, at least in part, on the configuration of the resource mapping and the identity of the AloT device and performing uplink transmission, in response to the downlink transmission, using the determined resource for the uplink transmission.

Obtaining the identity of the AloT device may comprise receiving an indication of the identity of the AloT device from the at least one activator apparatus.

The identity of the AloT device may be associated with the at least one activator apparatus.

The configuration of the resource mapping may comprise an indication of uplink resources associated with the identity of the AloT device.

The AloT device may comprise means for determining, based on the downlink transmission, an identity of the at least one activator apparatus and determining the resource for uplink transmission further based, at least in part, on the identity of the at least one activator apparatus.

The AloT device may comprise means for determining, based on the downlink transmission, the downlink resource in which the downlink transmission is received and determining the resource for uplink transmission further based, at least in part, on the downlink resource in which the downlink transmission is received.

Determining a resource for uplink transmission may comprise determining a time resource based on the configuration of the resource mapping and a frequency resource from a pool of frequency resources.

In a second aspect there is provided an activator apparatus comprising means for providing a downlink transmission to at least one ambient Internet of Things, AloT, device, wherein the downlink transmission comprises a configuration of a resource mapping for uplink transmission to at least one ambient internet of things, AloT, device, wherein the configuration of the resource mapping comprises an indication of uplink resources associated with the identity of the at least one AloT device.

The configuration of the resource mapping may further comprise an indication of uplink resources associated with at least one of the identity of the activator apparatus or a downlink resource in which a downlink transmission is provided from the activator apparatus to the AloT device.

The activator apparatus may comprise means for providing an indication of the identity of the at least one AloT device to the at least one AloT device.

The identity of the at least one AloT device may be associated with the activator apparatus.

In a third aspect there is provided a method comprising, at an AloT device, obtaining an identity of the AloT device, receiving a downlink transmission from at least one activator apparatus, wherein the downlink transmission comprises a configuration of a resource mapping, wherein the configuration of the resource mapping is for uplink transmission from the AloT device, determining a resource for uplink transmission based, at least in part, on the configuration of the resource mapping and the identity of the AloT device and performing uplink transmission, in response to the downlink transmission, using the determined resource for the uplink transmission.

Obtaining the identity of the AloT device may comprise receiving an indication of the identity of the AloT device from the at least one activator apparatus.

The identity of the AloT device may be associated with the at least one activator apparatus.

The configuration of the resource mapping may comprise an indication of uplink resources associated with the identity of the AloT device.

The method may comprise determining, based on the downlink transmission, an identity of the at least one activator apparatus and determining the resource for uplink transmission further based, at least in part, on the identity of the at least one activator apparatus.

The method may comprise determining, based on the downlink transmission, the downlink resource in which the downlink transmission is received and determining the resource for uplink transmission further based, at least in part, on the downlink resource in which the downlink transmission is received.

Determining a resource for uplink transmission may comprise determining a time resource based on the configuration of the resource mapping and a frequency resource from a pool of frequency resources.

In a fourth aspect there is provided a method comprising, at an activator apparatus, providing a downlink transmission to at least one ambient Internet of Things, AloT, device, wherein the downlink transmission comprises a configuration of a resource mapping for uplink transmission to at least one ambient internet of things, AloT, device, wherein the configuration of the resource mapping comprises an indication of uplink resources associated with the identity of the at least one AloT device.

The configuration of the resource mapping may further comprise an indication of uplink resources associated with at least one of the identity of the activator apparatus or a downlink resource in which a downlink transmission is provided from the activator apparatus to the AloT device.

The method may comprise providing an indication of the identity of the at least one AloT device to the at least one AloT device.

The identity of the at least one AloT device may be associated with the activator apparatus.

In a fifth aspect there is provided an apparatus comprising at least one processor, and at least one memory storing instructions which, when executed by the processor, cause the apparatus at least to perform the method according to the third or fourth aspect.

In a sixth aspect there is provided a computer readable medium comprising instructions which, when executed by an apparatus, cause the apparatus to perform at least the method according to the third or fourth aspect.

In a seventh aspect there is provided a non-transitory computer readable medium comprising program instructions for causing an apparatus to perform at least the method according to the third or fourth aspects.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example 5GS communication system;
Figure 2 shows a schematic diagram of an example mobile communication device;
Figure 3 shows a schematic diagram of an example control apparatus;
Figure 4 shows a schematic diagram of an example AloT scenario;
Figure 5 shows a schematic diagram of an example AloT scenario;
Figure 6 shows a flowchart of a method according to an example embodiment;
Figure 7 shows a flowchart of a method according to an example embodiment;
Figure 8 shows a signalling flow according to an example embodiment;
Figure 9 shows a signalling flow according to an example embodiment.

### Detailed description

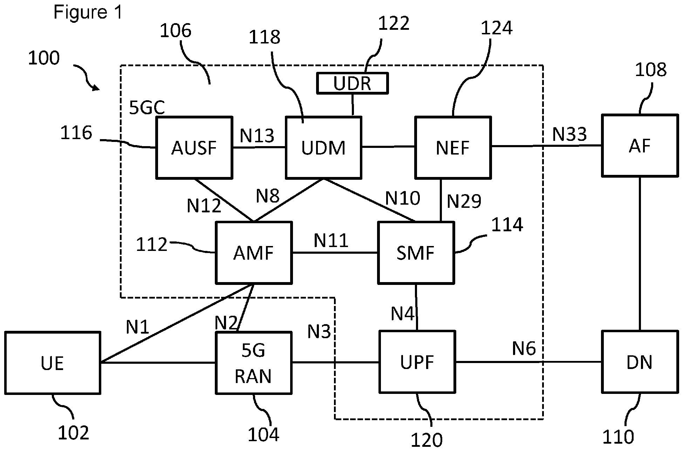

Before explaining in detail the examples, certain general principles of a wireless communication system and mobile communication devices are briefly explained with reference to Figure 1, Figure 2 and Figure 3 to assist in understanding the technology underlying the described examples.

An example of a suitable communications system is the 5G or NR concept. Network architecture in NR may be similar to that of LTE-advanced. Base stations of NR systems may be known as next generation NodeBs (gNBs). Changes to the network architecture may depend on the need to support various radio technologies and finer Quality of Service (QoS) support, and some on-demand requirements for e.g. QoS levels to support Quality of Experience (QoE) for a user. Also network aware services and applications, and service and application aware networks may bring changes to the architecture. Those are related to Information Centric Network (ICN) and User-Centric Content Delivery Network (UC-CDN) approaches. NR may use Multiple Input - Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Deployments may be cloud-native network function (CNF) based, where network functions comprise one or more pods. Cloud computing or data storage may also be utilized.

In radio communications this may mean node operations are to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of LTE or may even be non-existent.

Figure 1 shows a schematic representation of a 5G system (5GS) 100. The 5GS may comprise a user equipment (UE) 102 (which may also be referred to as a communication device or a terminal), a 5G radio access network (5GRAN) 104, a 5G core network (5GCN) 106, one or more internal or external application functions (AF) 108 and one or more data networks (DN) 110.

An example 5G core network (CN) comprises functional entities. The 5GCN 106 may comprise one or more Access and mobility Management Functions (AMF) 112, one or more session management functions (SMF) 114, an authentication server function (AUSF) 116, a Unified Data Management (UDM) 118, one or more user plane functions (UPF) 120, a Unified Data Repository (UDR) 122 and/or a Network Exposure Function (NEF) 124. The UPF is controlled by the SMF (Session Management Function) that receives policies from a PCF (Policy Control Function).

The CN may be connected to a UE via the Radio Access Network (RAN) or through fixed access via a non-3GPP Interworking Function (N3IWF). The 5GRAN may comprise one or more gNodeB (gNB) Distributed Unit (DU) functions connected to one or more gNodeB (gNB) Centralized Unit (CU) functions. The RAN may comprise one or more access nodes.

A User Plane Function (UPF) referred to as PDU Session Anchor (PSA) may be responsible for forwarding frames back and forth between the DN and the tunnels established over the 5G towards the UE(s) exchanging traffic with the DN.

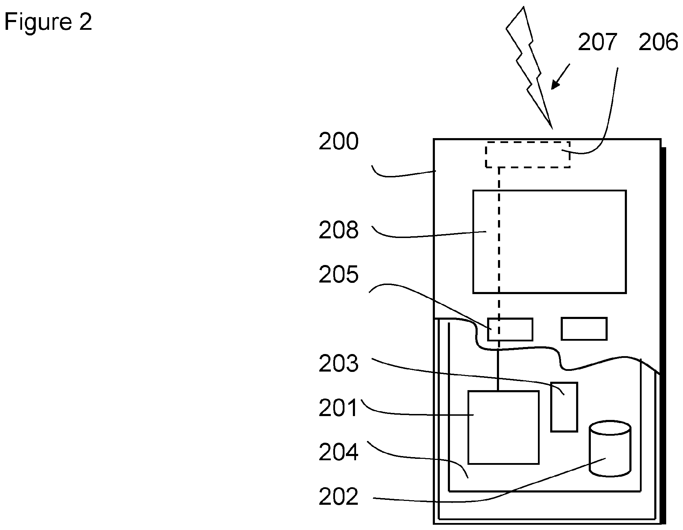

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, voice over IP (VoIP) phones, portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), smart devices, wireless customer-premises equipment (CPE), or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts, and other information.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant components can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

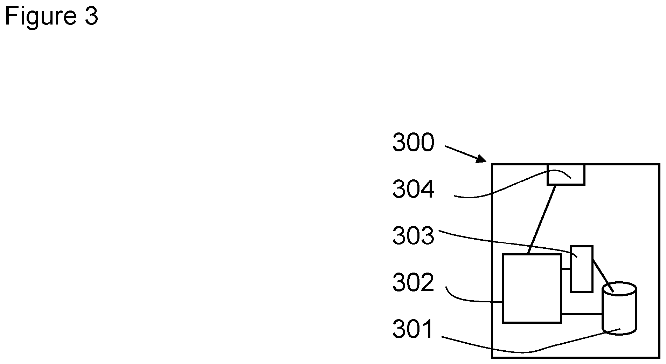

Figure 3 shows an example of a control apparatus 300 for a communication system, for example to be coupled to and/or for controlling a station of an access system, such as a RAN node, e.g. a base station, eNB or gNB, a relay node or a core network node such as an MME or Serving Gateway (S-GW) or Packet Data Network Gateway (P-GW), or a core network function such as AMF/SMF, or a server or host. The method may be implemented in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head.

Ambient Internet of Things (AloT) is, for example a 3GPP system which aims to provide the loT domain with deployment in extreme operational conditions (e.g., high pressure, extremely high/low temperature), maintenance-free devices (e.g., no need for the device battery replacement) and devices with ultra-low complexity or very small device size/form factor (e.g., thickness of mm), longer life cycle, etc. Table 4.1.1-1 of TR 38.848 lists example use cases for AloT while TR 22.840 elaborates on the use cases.

The AloT relies on ultra-low complexity devices with ultra-low power consumption for the very-low end loT applications. An AloT device may be an IoT device powered by energy harvesting, being either battery-less or with limited energy storage capability (e.g., using a capacitor). For AloT, energy may be provided to the AloT device through the harvesting of radio waves, light, motion, heat, or any other suitable power source.

One example AloT device type (type i) has ~1 µW peak power consumption, has energy storage, initial sampling frequency offset (SFO) up to 10^{X} ppm and neither DL nor UL amplification in the device. The device's UL transmission is backscattered on a carrier wave provided externally.

On example AloT device (type ii) has ≤ a few hundred µW peak power consumption, has energy storage, initial sampling frequency offset (SFO) up to 10^{X} ppm and DL and/or UL amplification in the device. The device's UL transmission may be generated internally by the device or be backscattered on a carrier wave provided externally. Note that the value X is to be determined.

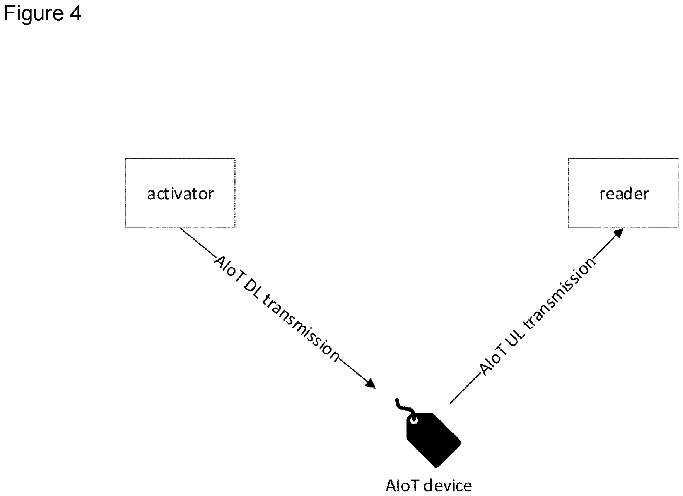

Figure 4 illustrates an example AloT scenario. In the example scenario illustrated in Figure 4, an activator (which may be e.g., gNB or a UE) performs an AloT DL transmission to provide a radio carrier wave to an AloT device. The AloT device makes use of the radio carrier wave to harvest energy and performs an UL transmission towards a reader (which may be, e.g., a gNB or a UE). Depending on the capability of the AloT device, device's UL transmission may be generated internally by the device using the stored energy or be backscattered on the carrier wave provided externally.

The activator and the reader functionality may co-exist in a node (which may be, e.g., gNB or UE). The activator may also be referred as a reader. A node with the radio carrier wave transmission functionality is referred as a carrier wave emitter node or an illuminator. The carrier wave emitter functionality may co-exist with the activator functionality in a node. The activator may also be referred as an illuminator or a carrier wave emitter. The UL and DL transmissions may be performed either on the Uu interface or on a sidelink interface. In the following, the terms "DL" and "UL" are used to represent the direction of transmissions towards the AloT device, and from the AloT device, respectively. The term "activator" is used to represent the node which sends DL transmissions to the AloT device and the term "reader" is used to represent the node which receives UL transmissions from the AloT device.

One example AloT use case is an asset tracking scenario (e.g., in a warehouse) involving multiple AloT activators (e.g., UEs), AloT devices (e.g., tags) and at least a reader (e.g., a UE).

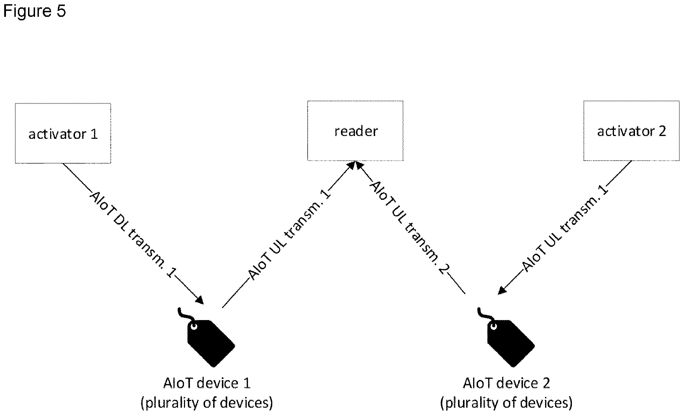

Figure 5 illustrates an example AloT scenario with multiple activators (activator 1, activator 2) and multiple AloT devices (AloT device 1, AloT device 2). In this example, the AloT activators perform the AloT DL transmissions with certain carrier waves towards the AloT devices. In response, the AloT devices perform AloT UL transmissions towards the reader (e.g., UE) by modulating the carrier wave provided by the activator with AloT data. Subsequently, the reader receives the AloT UL transmissions and demodulates them to receive the AloT data.

When multiple AloT devices are activated by AloT DL transmission(s), concurrently performed response AloT UL transmissions from different AloT devices may collide at the reader. Hence, the reader may not be able to successfully demodulate the transmissions and receive the AloT data. In one solution, the AloT devices may be allocated with e.g., orthogonal resources for their AloT UL transmissions. However, it is not clear how such a resource allocation can be performed, since the number of AloT devices and their relative locations are a-priori unknown.

Hence, there is a need for a scheme which provides an appropriate (e.g., orthogonal) resource allocation (e.g., time/frequency/code resources) for AloT devices so that the AloT UL transmissions from one AloT device does not conflict with the AloT UL transmissions from the other AloT devices that are activated by the same or different (e.g., from different activator) activation AloT DL transmissions.

The following proposes a solution to avoid the resource conflict among AloT UL transmissions at the reader. This is achieved by enabling the AloT devices to a identify an orthogonal AloT UL resource based on the activator ID, the AloT DL transmission resource and/or the AloT device ID.

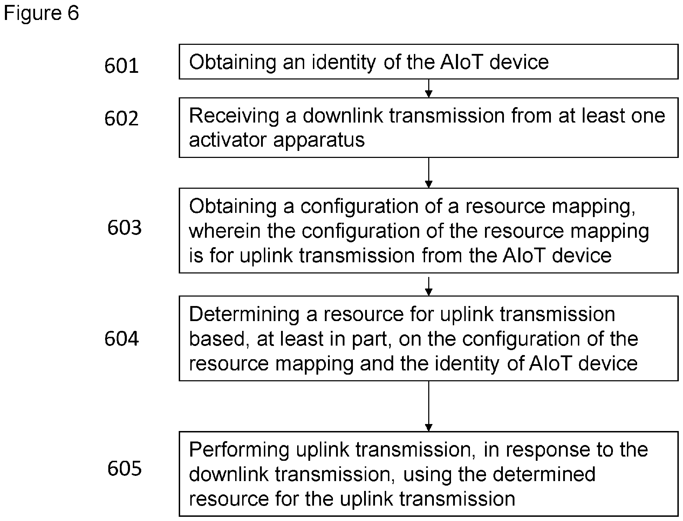

Figure 6 shows a flowchart of a method according to an example embodiment. The method may be performed at an AloT device. The AloT device may comprise an AloT tag device.

At 601, the method comprises obtaining an identity of the AloT device.

At 602, the method comprises receiving a downlink transmission from at least one activator apparatus.

At 603, the method comprises obtaining a configuration of a resource mapping, wherein the configuration of the resource mapping is for uplink transmission from the AloT device.

At 604 the method comprises determining a resource for uplink transmission based, at least in part, on the configuration of the resource mapping and the identity of AloT device.

At 605, the method comprises performing uplink transmission, in response to the downlink transmission, using the determined resource for the uplink transmission.

The configuration of the resource mapping may comprise an indication of uplink resources associated with the identity of the AloT device

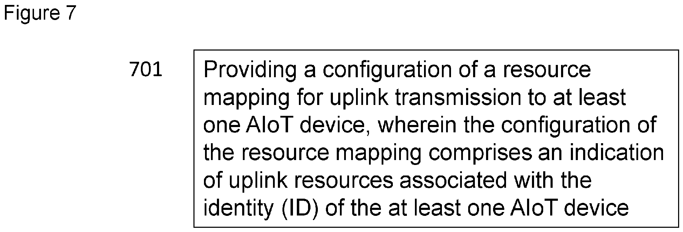

Figure 7 shows a flowchart of a method according to an example embodiment. The method may be performed at an activator apparatus. The activator apparatus may comprise a base station, e.g., a gNB, or a UE. An activator device may also be referred to as a reader, a node with the radio carrier wave transmission functionality, a carrier wave emitter node or an illuminator.

At 701, the method comprises providing a configuration of a resource mapping for uplink transmission to at least one AloT device, wherein the configuration of the resource mapping comprises an indication of uplink resources associated with the identity (ID) of the at least one AloT device.

An activator apparatus may be referred to as an activator device or an activator and these terms are used interchangeably in the following.

The configuration of the resource mapping may further comprise an indication of uplink resources associated with at least one of the identity of the activator apparatus or a downlink resource in which a downlink transmission is provided from the activator apparatus to the AloT device.

The methods described above with reference to Figures 6 and 7 may avoid the resource conflict among the response AloT UL transmissions that are transmitted in response to activation AloT DL transmissions. In the case of a large number of AloT devices, providing resources individually to each device for response may be expensive in terms of control signaling. Instead, as proposed in the methods above, the AloT devices are provided with a configuration of a resource mapping and they can determine the resources to use themselves.

In an example embodiment, for an AloT UL transmission from an AloT device in response to an activation from an activator by means of an AloT DL transmission, the AloT device determines a resource for the AloT UL transmission based on at least the identity of the AloT device. The resource may further be determined based on the parameters: identity of the activator device and/or the resource associated with the AloT DL transmission. The determination may be based on a configuration of implicit and/or an explicit mapping between the AloT UL transmission resource and the identity of the AloT device and other parameters. The resource mapping may ensure orthogonality among the AloT resources allocated to different AloT devices. The AloT device performs its AloT UL transmission in the determined resource.

In the methods described with respect to Figures 6 and 7, the AloT devices are provided with a resource mapping configuration which, in an embodiment, comprises an indication of a set of AloT UL resources, a resource mapping rule which maps an AloT device ID and optionally, an activator ID and/or an AloT DL transmission resource to an AloT UL resource within a configured resource set. The mapping may be based on a cyclic shift of the time-frequency-sequence resource pattern over the configured set of AloT UL resources.

The configuration of the resource mapping may be referred to in the below as a resource mapping configuration or an AloT UL resource mapping configuration. These terms have the same meaning and are used interchangeably.

The DL transmission from the activator apparatus may comprise the configuration of a resource mapping for uplink transmission. Alternatively, or in addition, the configuration of the resource mapping may be received from a reader device or another network node, or may be configured at the AloT device. The resource mapping configuration may be configured (semi-) statically, dynamically, or pre-configured.

The configuration of the resource mapping may be sent in a system information block (SIB). Alternatively, or in addition, the configuration of the resource mapping may be sent in an AloT DL transmission. The configuration of the resource mapping may be sent in the DL transmission sent by the activator to the AloT device. In other words, obtaining the configuration of the resource mapping may comprise receiving the configuration of the resource mapping in a SIB or in the DL transmission from the activator apparatus.

The configuration of the resource mapping may provide a set of AloT UL resources that is available to the AloT devices for the AloT UL transmissions.

An AloT UL resource may be a time/frequency/code (or sequence) radio resource with certain AloT UL time/frequency/code resource pattern (e.g., time-frequency comb, different transmission sequences, e.g., Zadoff-Chu sequences).

The AloT UL resource may consist of one or multiple transmission AloT UL transmission opportunities. This allows a number of AloT UL retransmissions (i.e., AloT response repetition) to be configurable (in an implicit manner). Note that here, a retransmission happens without NACK by the reader, and it should be understood as a pre-configured repetition.

The AloT UL resources may have the same or different durations. This allows for duration of the AloT UL transmissions to be configurable (in an implicit manner).

The AloT UL resource may or may not contain contiguous OFDM symbols. This allows for the AloT UL transmission to have a time-frequency punctured pattern.

The AloT UL resource may be defined by a puncture pattern (in time and/or frequency) which may be useful to further reduce the interference.

The set of AloT UL resources may occur periodically (in the time domain). For example, for each subframe or a set of subframes, a set of UL resources may be defined. For example, the set may be defined over certain OFDM symbols, PRBs and sequences.

The set of AloT resources may be associated with an event (e.g., the transmission of certain AloT DL signal). For example, a specific AloT DL signal may trigger enablement/activation of a set of AloT UL resources.

The configuration of a resource mapping may include a resource mapping rule which allows the AloT device to select a particular AloT UL resource. The resource mapping rule may be provided as a table or an expression that maps an AloT UL resource to the identity of the activator, the AloT DL transmission resource and/or the identity of the AloT device.

The table or expression may result in a cyclic shift value. By applying the cyclic shift to the AloT UL time/frequency/code resource pattern, a particular AIoT UL resource is obtained from the set of AloT UL resources.

The resource mapping rule may involve a multi-stage resource identification. For example, determining a resource for uplink transmission may comprise determining a time resource based on the configuration of the resource mapping and a frequency resource from a pool of frequency resources.

In an example embodiment, based on the AloT DL transmission resource, a subset of AloT UL resource from a configured set may be identified. For example, from the configured set of time-frequency-code(or sequence) AloT UL resources, the subset of the resources that have certain fixed time-frequency offset to the AloT DL transmission resource are identified. In the second stage, based on e.g., the AloT device ID, a cyclic shift value for the sequences may be determined and accordingly the AloT UL resource is identified within the subset of resources.

A two-stage mapping configuration may be performed where the mapping configuration information is provided (semi-)statically, but the configuration is enabled/ disabled dynamically using, e.g., an AloT DL transmission. For example, the downlink transmission received at the AloT device may comprise an indication to activate or deactivate the configuration of the resource mapping from the at least one activator apparatus. A method as described with reference to Figure 6 may comprise activating or deactivating the configuration of the resource mapping based on the indication.

The AloT device may select an AloT UL resource based on the resource mapping rule indicated in the configuration. This is an example of determining a resource for uplink transmission based, at least in part, on the configuration of the resource mapping.

An AloT device may be configured to receive an AloT DL transmission from an activator, identify the identity of the activator, the resource in which the AloT DL transmission has been performed and identify the identity of the AloT device. The identity may be a group identifier in a group of AloT devices.

The AloT device IDs may be static or dynamically assigned.

Obtaining the identity of the AloT device may comprises receiving an indication of the identity of the AloT device from the at least one activator apparatus. For example, an AloT device may be provided with an identity by the activator or a reader or another network node.

The identity of the AloT device may be associated with the at least one activator apparatus and,in one example embodiment, may comprise the activator apparatus ID..

Whether a AloT device ID is static or dynamically assigned may depend on the AioT device category.

For example, for the AioT devices of type ii as described above, the IDs may be dynamically provided (from the activator) because of higher (compared to type i) energy availability and capability (hence allows for more interaction with the activator). The device type i as described above may have static IDs.

The AioT may determine the identity of the second device based on the DL transmission. For example, the DL transmission may include e.g., in a preamble, a sequence (time, frequency and/or code domain sequence/signal) that is associated with identity.

The AioT device may determine the AioT UL transmission resource based on at least the identity of the activator, the AioT DL transmission resource and/or the identity of the AioT device using the resource mapping configuration. In an example embodiment, an AioT device determines the AioT UL resource using the resource mapping configuration as well at least one of the activator ID, the AioT DL transmission resource and/or the AioT device ID.

Examples of a determination of the UL transmission resource by the AioT device include a determination based on a configured set of AioT UL resources K (which the time, frequency and code are provided in the configuration of the resource mapping), may at least include the following implementations:
Selected resource = mod(Activator ID,K)
Selected resource = mod(AioT device ID,K)
Selected resource = mod(Activator device ID + AioT ID,K)

The AioT device performs AioT UL transmission in the determined resource.

The activator may be configured to receive the configuration of the resources eligible to be used for the transmission of the activation signal as well as for the AioT device, reply and assign an identifier to each AioT device for which it performs a DL transmission.

Instead of the activator, the other nodes such as a reader may also assign identities to the AioT devices.

The activator is configured to send AioT UL resource mapping configuration(s) to the AioT device(s).

The activator device is configured to perform AioT DL transmission(s) towards the AioT device(s).

The reader is configured to receive the configuration of the resources eligible to be used for the reception of the AioT device transmissions and receive AioT UL transmissions from the AioT device(s) in the configured resources.

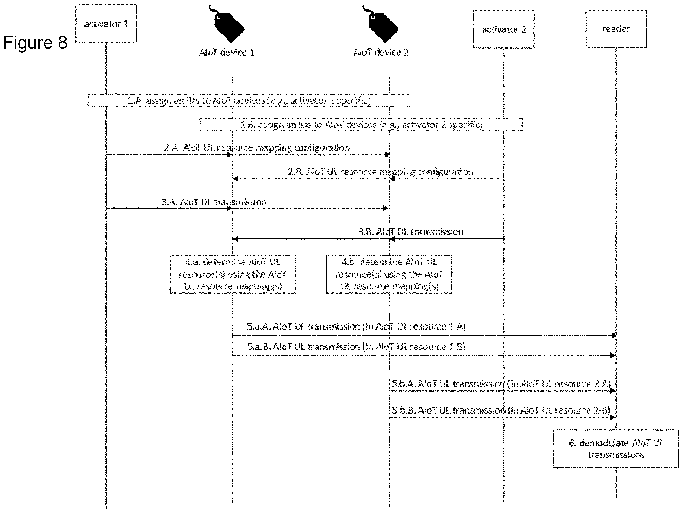

Figure 8 shows a signalling flow according to an example embodiment. in the steps related to provisioning of AioT UL resource mapping configuration and AioT DL transmission.

At step 1, the activator devices assign an identifier to the AioT devices. Activator 1 assigns an identifier to AioT device 1 and AioT device 2 in step 1.A. and Activator 2 assigns an identifier to AloT device 1 and AioT device 2 in step 1.B.

In this example, the AioT devices in the coverage area of an activator are grouped and assigned with a unique identifier within the group. Note that the number of groups are equal to the number of activators in this example.

The ID assignment may be performed by the activators (as considered in this example in step 1.A. and Step 1.B.) or by another entity.

At step 2, the AloT devices are provided with an AioT UL transmission resource mapping configuration.

In the example shown in Figure 8, the configuration is provided by activator 1 in step 2.A and activator 2 in step 2.B. to the AioT device(s). In this example, since AioT device 1 and AioT device 2 are in the coverage of both the activators, it may be sufficient for one activator to provide the configuration to both AloT devices.

In the example shown in Figure 8, the configuration is provided separately to a DL transmission from the Activator. The configuration may be provided in a system information block (SIB). In a further embodiment, the mapping configuration (provided in e.g., SIB) may be enabled (or activated)/disabled dynamically using, e.g., an AloT DL transmission.

At step 3, each activator performs an AloT DL transmission.

At step 4, the AloT devices determine the AloT UL transmission resources based on at least the identity of the activator, the AloT DL transmission resource and/or the identity of the AloT device using the resource mapping configuration received at step 2.

At step 5, the AloT devices perform the AloT UL transmissions in the resources determined at step 4.

At step 6, the reader receives the AloT UL transmissions and demodulates them to obtain the AloT data.

Since the AloT UL resource orthogonality is ensured in determination of the resources in step 4, (based on the configuration received in step2), the reader can successfully demodulate all the AloT UL responses.

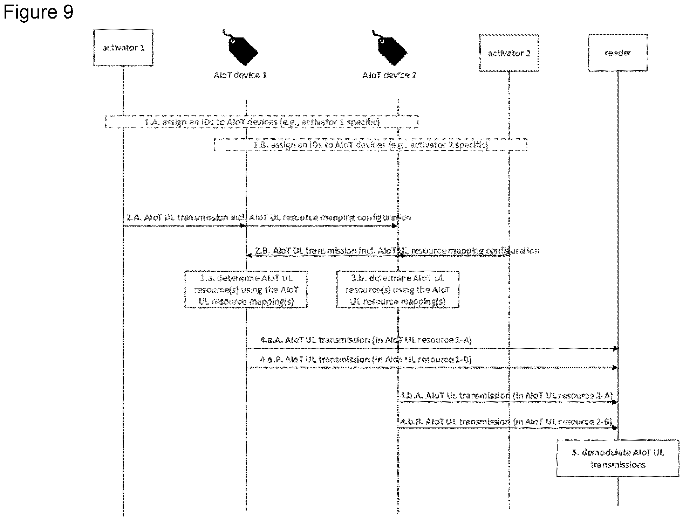

Figure 9 shows a signalling flow according to an example embodiment.

In the example embodiment shown in Figure 9, the AloT DL transmission at step 2.A. and step 2.B. (corresponding to the AloT DL transmission at step 3.A and step 3.B of Figure 8) include the resource mapping configuration.

Step 1 of Figure 9 is the same as step 1 of Figure 8.

Steps 3 to 5 of Figure 9 correspond to steps 4 to 6 of Figure 8.

In the case of large number of AloT devices (e.g., an asset tracking like use case), providing resources for UL transmission or a configuration of the resources individually to each device for response may be expensive in terms of control signaling. Instead, as shown in the example of Figure 9 the AloT devices may be provided with the configuration in the DL transmission. The DL transmission may comprising an indicator to a mapping rule of a configuration, rather than the mapping rule or configuration itself. That is the example of Figure 8 may be combined with that of Figure 9 such that the configuration is provided in separate signaling, such as a SIB, and an indicator to a mapping rule of the configuration is provided in the DL transmission.

A reader may be configured to detect AloT devices IDs K = {k1, ..., kA}, activated by the activators IDs {a1, ..., aL}. The reader uses the IDs above and the preconfigured mapping to obtain the time-frequency resources where the AloT transmissions are expected to happen.

A reader may determine the punctured resources for each AloT device, together with the expected duration of the AloT transmission. The reader starts sampling the received signal for a pre-configured period and collects signal samples in a vector y.

For each AloT device k in the list K that has not been yet decoded, the reader selects a subset of the samples y, called yS, which are punctured by the majority of all other AloT devices j ∈ K\k. These samples contain the contribution of device k and potentially a small set Z of other devices. The reader then applies successive interference cancellation to the set of devices V = k ∪ Z. For example, for each device v ∈ V, the reader regenerates locally the AloT reply for each device v in the set V and attempts to detect the AloT signal v and if successful, removes the signal from the the total signal yS.

An apparatus may comprise means for obtaining an identity of an AloT device, receiving a downlink transmission from at least one activator apparatus, obtaining a configuration of a resource mapping, wherein the configuration of the resource mapping is for uplink transmission from the AloT device, determining a resource for uplink transmission based, at least in part, on the configuration of the resource mapping and the identity of the AloT device; and performing uplink transmission, in response to the downlink transmission, using the determined resource for the uplink transmission.

The apparatus may comprise the AloT device, be the AloT device or be comprised in the AloT device or a chipset for performing at least some actions of/for the AloT device.

An apparatus may comprise means for providing a configuration of a resource mapping for uplink transmission to at least one ambient internet of things, AloT, device, wherein the configuration of the resource mapping comprises an indication of uplink resources associated with the identity of the at least one AloT device.

The apparatus may comprise an activator apparatus, for example, a UE as described with reference to Figure 2 or a base station such as a gNB, be the activator apparatus or be comprised in the activator apparatus or a chipset for performing at least some actions of/for the activator apparatus.

In the apparatus described above, the DL transmission may comprise the configuration of the resource mapping.

In an embodiment, the apparatus comprising a network function refers to a device/apparatus which is configured to perform or performs at least part of functionalities of the network function or to a device/apparatus which comprises circuitry (e.g., chipset) configured to perform or performing at least part of functionalities of the network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems such as 6G networks or 5G-Advanced networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media. The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process.

Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An ambient internet of things, AloT, device comprising at least one processor, and at least one memory storing instructions which, when executed by the processor, cause the AloT device at least to perform:
obtaining an identity of the AloT device;
receiving a downlink transmission from at least one activator apparatus, wherein the downlink transmission comprises a configuration of a resource mapping, wherein the configuration of the resource mapping is for uplink transmission from the AloT device;
determining a resource for uplink transmission based, at least in part, on the configuration of the resource mapping and the identity of the AloT device; and
performing uplink transmission, in response to the downlink transmission, using the determined resource for the uplink transmission.

2. The AloT device according to claim 1, wherein obtaining the identity of the AloT device comprises receiving an indication of the identity of the AloT device from the at least one activator apparatus.

3. The AloT device according to claim 2, wherein the identity of the AloT device is associated with the at least one activator apparatus.

4. The AloT device according to any of claims 1 to 3, wherein the configuration of the resource mapping comprises an indication of uplink resources associated with the identity of the AloT device.

5. The AloT device according to any of claims 1 to 4, wherein the AloT device is further caused to perform:
determining, based on the downlink transmission, an identity of the at least one activator apparatus; and
determining the resource for uplink transmission further based, at least in part, on the identity of the at least one activator apparatus.

6. The AloT device according to any of claims 1 to 5, wherein the AloT device is further caused to perform:
determining, based on the downlink transmission, the downlink resource in which the downlink transmission is received; and
determining the resource for uplink transmission further based, at least in part, on the downlink resource in which the downlink transmission is received.

7. The AloT device according to any of claims 1 to 6, wherein determining a resource for uplink transmission comprises determining a time resource based on the configuration of the resource mapping and a frequency resource from a pool of frequency resources.

8. An activator apparatus (102, 104, 200) comprising at least one processor (201), and at least one memory (202) storing instructions which, when executed by the processor, cause the activator apparatus at least to perform:
providing a downlink transmission to at least one ambient Internet of Things, AloT, device, wherein the downlink transmission comprises a configuration of a resource mapping for uplink transmission to at least one ambient internet of things, AloT, device, wherein the configuration of the resource mapping comprises an indication of uplink resources associated with the identity of the at least one AloT device.

9. The activator apparatus according to claim 8, wherein the configuration of the resource mapping further comprises an indication of uplink resources associated with at least one of the identity of the activator apparatus or a downlink resource in which a downlink transmission is provided from the activator apparatus to the AloT device.

10. The activator apparatus according to claim 8 or claim 9, wherein the activator apparatus is further caused to perform: providing an indication of the identity of the at least one AloT device to the at least one AloT device.

11. The activator apparatus according to claim 10, wherein the identity of the at least one AloT device is associated with the activator apparatus.

12. A method comprising, at an ambient internet of things, AloT, device:
obtaining an identity of the AloT device;
receiving a downlink transmission from at least one activator apparatus, wherein the downlink transmission comprises a configuration of a resource mapping, wherein the configuration of the resource mapping is for uplink transmission from the AloT device;
determining a resource for uplink transmission based, at least in part, on the configuration of the resource mapping and the identity of the AloT device; and
performing uplink transmission, in response to the downlink transmission, using the determined resource for the uplink transmission.

13. A method comprising, at an activator apparatus:
providing a downlink transmission to at least one ambient Internet of Things, AloT, device, wherein the downlink transmission comprises a configuration of a resource mapping for uplink transmission to at least one ambient internet of things, AloT, device, wherein the configuration of the resource mapping comprises an indication of uplink resources associated with the identity of the at least one AloT device.

14. A computer readable medium comprising instructions which, when executed by a ambient internet of things, AloT, device, cause the AloT device at least to perform:
obtaining an identity of the AloT device;
receiving a downlink transmission from at least one activator apparatus, wherein the downlink transmission comprises a configuration of a resource mapping, wherein the configuration of the resource mapping is for uplink transmission from the AloT device;
determining a resource for uplink transmission based, at least in part, on the configuration of the resource mapping and the identity of the AloT device; and
performing uplink transmission, in response to the downlink transmission, using the determined resource for the uplink transmission.

15. A computer readable medium comprising instructions which, when executed by an activator apparatus, cause the activator apparatus at least to perform:
providing a downlink transmission to at least one ambient Internet of Things, AloT, device, wherein the downlink transmission comprises a configuration of a resource mapping for uplink transmission to at least one ambient internet of things, AloT, device, wherein the configuration of the resource mapping comprises an indication of uplink resources associated with the identity of the at least one AloT device.
